# EUROPEAN PATENT SPECIFICATION

(11) **EP 1 507 576 B1**
(45) Date of publication and mention of the grant of the patent: **25.08.2010**
(21) Application number: 03720448.4
(22) Date of filing: 10.04.2003
(51) Int. Cl.: B01D 27/08

(54) **RECTANGULAR DISPOSABLE FILTER CARTRIDGE**
RECHTECKIGE EINWEGFILTERPATRONE
CARTOUCHE DE FILTRE JETABLE RECTANGULAIRE

(30) Priority: 29.05.2002 IT RE20020011 U
(43) Date of publication of application: 23.02.2005
(73) Proprietor: UFI Filters S.p.A., 46047 Porto Mantovano (Mantova) (IT)
(72) Inventor: GIRONDI, Giorgio, I-46100 Mantova (IT)
(74) Representative: Corradini, Corrado
(86) International application number: PCT/EP2003/003741
(87) International publication number: WO 2003/099414

(56) References cited:
- FR-A- 2 213 792
- US-A- 2 697 522
- US-A- 3 591 004
- US-A- 4 204 960
- US-A- 4 422 939
- US-A- 4 618 423

## Description

### TECHNICAL FIELD

This patent relates to a filter cartridge for diesel fuel.

### BACKGROUND ART

Known filter cartridges are generally cylindrical in shape and comprise a disposable part containing the filter cartridge and a part permanently fixed to the motor vehicle.

They present a bulk problem deriving mainly from the cylindrical shape of the disposable part, which sometimes creates problems for the vehicle designer, who is presented with an engine compartment which is ever narrower.

US-A-3591004 describes a fuel filter comprising a fixed base and a disposable part associated with the base and containing the filter cartridge. The disposable part comprises a cup shaped housing sealed by a cover plate made of sheet metal and is secured to the fixed base by an additional clamp.

The disposable part comprises a shell closed by a cover, and the filter cartridge divides the shell into two chambers both contained in the shell itself. US-A-4618423 describes a fuel filter comprising a fixed base and a disposable part associated with the base and containing the filter cartridge. The disposable part comprises a rectangular cup-shaped portion sealed by a rear wall and secured to the fixed part by two spring retaining clips which are pivotally mounted on the fixed part engaging recesses provided on the front part of the rectangular cup-shaped portion.

The object of the invention is to eliminate the drawbacks of known cartridges within the framework of a simple, economical and efficient solution.

### DISCLOSURE OF THE INVENTION

This object is attained by a cartridge having the characteristics defined in the claims.

According to the invention, the disposable part is of prismatic form and is composed of two half-shells securely joined together to define a sealed compartment divided into two chambers by a prismatic filter plate, the disposable part being provided with means for its coupling to and release from the fixed part.

According to the invention, the disposable part is associated with the fixed part by snap-coupling means

The merits and the operational characteristics of the invention will be apparent from the ensuing detailed description of a preferred embodiment thereof, given with reference to the accompanying drawings.

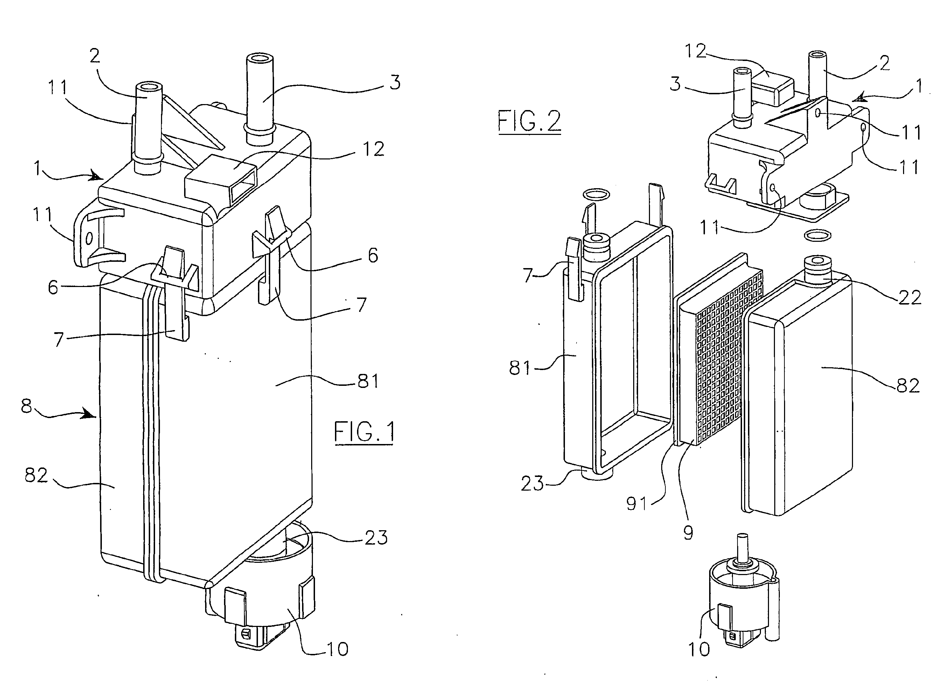

Figure 1 is a perspective view of the invention.
Figure 2 an exploded perspective view thereof.
Figure 3 is a front view of the invention.
Figure 4 is an exploded perspective view of a variant of the invention.
Figure 5 shows the variant of Figure 4 seen from a different direction.

The figures show a base 1, of substantially parallelepiped shape and small thickness, generally constructed of a suitable plastic material, a light alloy or aluminium.

The base 1 comprises a compartment 12 which contains the usual diesel fuel heating device provided to prevent the separation of paraffin which would clog the filter.

It is intended to be permanently fixed within the vehicle engine compartment by the lugs 11, in an easily accessible position.

The base comprises an entry conduit for the diesel fuel, an exit conduit for the filtered diesel fuel, and a first terminal block 4 to be connected to the vehicle electrical system.

The base 1 also comprises, on three sides, the sockets 6 to receive the appendices 7 by which the underlying casing 8 containing the filter cartridge is fixed.

The casing 8 is composed of two shells 81 and 82 securely joined together to form a sealed container.

Said container is divided internally by a filter plate 9, which sealedly divides it into two chambers for the entry and exit of the diesel fuel respectively.

More precisely, the filter plate 9 comprises a small frame 91 which during its constructional assembly is laid against an inner shoulder of the shell 82.

From the entry chamber there upwardly projects a conduit 22 provided with an O-ring, for insertion into the conduit 2 of the base.

The conduit 22 branches from the shell 82.

From the exit chamber there upwardly projects a conduit 33 provided with an O-ring, for insertion into the conduit 3 of the base.

The conduit 33 branches from the shell 81.

The shell 81 lowerly comprises a discharge conduit 23 for the water which separates from the diesel fuel on its exit from the filter plate 9, into which a sensor 10 of known type is inserted to indicate when the water level exceeds a certain amount.

The sensor 10 comprises a terminal block for connection to the vehicle electrical system.

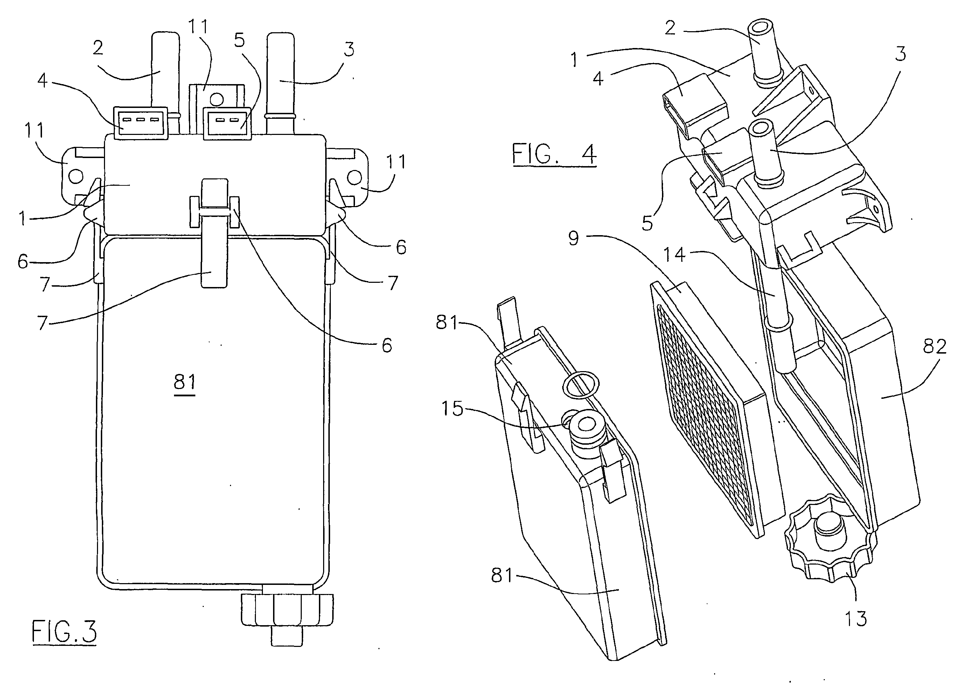

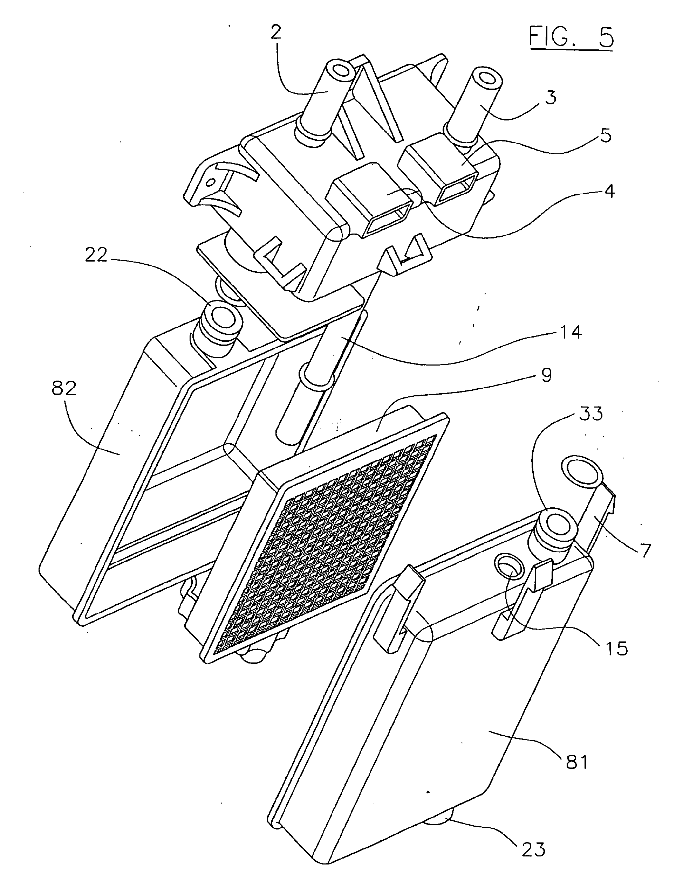

According to an equivalent embodiment, shown in Figures 4 and 5, the conduit 23 is closed by a cap 13, while the level sensor 14 branches from the underside of the base 1 for insertion into the hole 15 of the shell 81 In this case the electrical connections between the sensor and the vehicle electrical system are made via the second terminal block 5 of the base 1. The filter plate is formed of known materials and presents a porosity which decreases from the entry to the exit of the diesel fuel.

The water suspended in the diesel fuel separates onto the exit wall of the plate 9 and falls to the bottom of the casing 8.

The casing 8 plus the cartridge 9 are disposable and are quickly associated with the base 1 by snap-inserting the appendices 7 under the sockets 6.

All the objects of the invention are attained by the aforedescribed device. The base is fixed into the vehicle engine compartment in a suitable position, and after being associated with the disposable casing occupies a much smaller space than that of a traditional cylindrical filter of equal efficiency.

The small dimensions of the device enable the cartridge to be replaced with limited loss of diesel fuel.

The detailed description of the water level sensors and of the electrical connections of the device is omitted as these are well known to the expert of the art.

## Claims

1. A vehicle diesel fuel filter of the type comprising a fixed base (1) within the vehicle engine compartment and a disposable part associated with the base (1),
- said base (1) comprising an entry for the diesel fuel to be filtered and an exit for the filtered diesel fuel, said disposable part being provided with means for its coupling to and release from the base (1), the disposable part comprising a filter plate (9) and a containing casing (8) thereof, the containing casing (8) being of prismatic form, **characterised in that** said containing casing (8) is composed of two half-shells (81, 82) securely joined together to define a sealed compartment divided into two chambers by the filter plate (9)
- for the entry and exit of the diesel fuel respectively, the filter plate (9) comprising a frame (91) which during the assembly is laid against an inner shoulder of one of said half-shells (81, 82), each of said two chambers being located into one of said half-shells (81, 82).

2. A filter as claimed in claim 1, **characterised in that** said coupling and release means comprising snap-fixing means arranged to engage in suitable seats in the base.

3. A filter as claimed in claim 2, **characterised in that** said snap-fixing means comprise appendices (7).

4. A filter as claimed in claim 1, **characterised in that** diesel fuel entry and exit conduits (22,32) are positioned in the top of the disposable part (8).

5. A filter as claimed in claim 1, **characterised in that** the disposable part (8) comprises a lower conduit (23) for discharging the water which accumulates within the diesel fuel exit chamber.

6. A filter as claimed in claim 5, **characterised in that** said lower conduit (23) is closed by an external cap (13).

7. A filter as claimed in claim 5, **characterised in that** said lower conduit (23) is closed by a water level sensor (14) comprising a terminal block (5) for connection to the vehicle electrical system.

8. A filter as claimed in claim 1, **characterised in that** from the underside of the base (1) there branches an appendix to be inserted into the compartment containing the filter plate (9), and comprising a level sensor (14) for the water which accumulates in the fuel exit chamber.

9. A filter as claimed in claim 1, **characterised in that** the base (1) comprises elements for heating the diesel fuel.

10. A filter as claimed in claim 1, **characterised in that** the base (1) comprises at least one terminal block (5) for connection to the vehicle electrical system.

## Patentansprüche

1. Ein Kfz-Dieselkraftstofffilter einschließlich eines festen Sockels (1) innerhalb des Fahrzeugmotorraumes und eines Einwegteils, der mit dem Sockel (1) in Verbindung steht, wobei der Sockel (1) einen Einlass für den zu filternden Dieselkraftstoff und einen Auslass für den gefilterten Dieselkraftstoff beinhaltet und der Einwegteil mit Mitteln zum Koppeln an und Lösen von dem Sockel (1) ausgestattet ist. Der Einwegteil beinhaltet eine Filterplatte (9), die von einem Gehäuse (8) umschlossen wird, wobei das Gehäuse (8) eine prismatische Form aufweist, **dadurch gekennzeichnet, dass** das Gehäuse (8) aus zwei Halbschalen (81, 82) besteht, die fest zusammengesetzt sind und so einen versiegelten Raum bilden, der durch die Filterplatte (9) für den jeweiligen Ein- und Auslass des Dieselkraftstoffs in zwei Kammern unterteilt ist. Die Filterplatte (9) beinhaltet einen Rahmen (91), der während der Montage gegen eine Innenschulter einer der Halbschalen (81, 82) angelegt wird, und beide Kammern liegen in einer der Halbschalen (81, 82).

2. Ein Filter nach Patentanspruch 1, **dadurch gekennzeichnet, dass** die Mittel zum Koppeln und Lösen Schnappverschlussmittel beinhalten, die so angeordnet sind, dass sie in geeignete Einrastnuten am Sockel einrasten.

3. Ein Filter nach Patentanspruch 2, **dadurch gekennzeichnet, dass** die Schnappverschlussmittel Fortsätze (7) beinhalten.

4. Ein Filter nach Patentanspruch 1, **dadurch gekennzeichnet, dass** die Dieselkraftstoffeinlass- und -auslassleitungen (22, 32) oben an der Spitze des Einwegteils (8) angebracht sind.

5. Ein Filter nach Patentanspruch 1, **dadurch gekennzeichnet, dass** der Einwegteil (8) eine untere Leitung (23) zum Ablassen des Wassers beinhaltet, das sich in der Dieselkraftstoffauslasskammer ansammelt.

6. Ein Filter nach Patentanspruch 5, **dadurch gekennzeichnet, dass** die untere Leitung (23) von einem externen Verschlussdeckel (13) verschlossen wird.

7. Ein Filter nach Patentanspruch 5, **dadurch gekennzeichnet, dass** die untere Leitung (23) von einem Wasserpegelfühler (14) verschlossen wird, der einen Anschlussblock (Klemmenblock) (5) für den Anschluss an das Fahrzeugbordnetz beinhaltet.

8. Ein Filter nach Patentanspruch 1, **dadurch gekennzeichnet, dass** sich von der Unterseite der Basis (1) ein Fortsatz abzweigt, der in den Raum mit der Filterplatte (9) eingeführt werden soll, und der einen Pegelfühler (14) für das Wasser enthält, das sich in der Kraftstoffauslasskammer ansammelt.

9. Ein Filter nach Patentanspruch 1, **dadurch gekennzeichnet, dass** der Sockel (1) Elemente zum Heizen des Dieselkraftstoffs beinhaltet.

10. Ein Filter nach Patentanspruch 1, **dadurch gekennzeichnet, dass** der Sockel (1) wenigstens einen Anschlussblock (Klemmenblock) (5) für den Anschluss an das Fahrzeugbordnetz beinhaltet.

## Revendications

1. Un filtre à carburant diesel pour véhicule, de type comprenant une base fixe (1) dans le logement du moteur du véhicule et une partie jetable associée à la base (1), ladite base (1) comprenant une entrée pour le carburant diesel à filtrer et une sortie pour le carburant diesel filtré, ladite partie jetable étant dotée d'un dispositif pour l'accouplement et le détachement de la base (1), la partie jetable comprenant une plaque filtrante (9) et un carter (8) de logement de cette dernière, le carter de logement (8) étant de forme prismatique, **caractérisé par le fait que** le carter de logement (8) comprend deux demi-coques (81, 82) solidement couplées ensemble pour définir un compartiment scellé divisé en deux chambres par la plaque filtrante (9), respectivement pour l'entrée et la sortie du carburant diesel, la plaque filtrante (9) comprenant un châssis (91) qui est posé contre un épaulement intérieur de l'une desdites demi-coques (81, 82) lors de l'assemblage, chacune desdites deux chambres étant située dans l'une desdites demi-coques (81, 82).

2. Un filtre selon la revendication 1, **caractérisé par le fait que** ledit dispositif d'accouplement et de détachement comprend un dispositif de fixation par enclenchement disposé pour s'enclencher dans les sièges appropriés de la base.

3. Un filtre selon la revendication 2, **caractérisé par le fait que** ledit dispositif de fixation par enclenchement comprend des appendices (7).

4. Un filtre selon la revendication 1, **caractérisé par le fait que** les conduites d'entrée et de sortie du carburant diesel (22, 32) sont positionnées au sommet de la partie jetable (8).

5. Un filtre selon la revendication 1, **caractérisé par le fait que** la partie jetable (8) comprend une conduite inférieure (23) pour l'évacuation de l'eau qui s'accumule dans la chambre de sortie du carburant diesel.

6. Un filtre selon la revendication 5, **caractérisé par le fait que** ladite conduite inférieure (23) est fermée par un bouchon externe (13).

7. Un filtre selon la revendication 5, **caractérisé par le fait que** ladite conduite inférieure (23) est fermée par un capteur de niveau d'eau (14) comprenant un bornier (5) pour le raccordement au circuit électrique du véhicule.

8. Un filtre selon la revendication 1, **caractérisé par le fait que** le dessous de la base (1) présente un appendice à introduire dans le compartiment contenant la plaque filtrante (9) et comprenant un capteur de niveau (14) pour l'eau qui s'accumule dans la chambre de sortie du carburant.

9. Un filtre selon la revendication 1, **caractérisé par le fait que** la base (1) comprend des éléments pour chauffer le carburant diesel.

10. Un filtre selon la revendication 1, **caractérisé par le fait que** la base (1) comprend au moins un bornier (5) pour le raccordement au circuit électrique du véhicule.
